# EUROPÄISCHE PATENTSCHRIFT

(11) **EP 2 370 214 B1**
(45) Veröffentlichungstag und Bekanntmachung des Hinweises auf die Patenterteilung: **13.11.2013**
(21) Anmeldenummer: 09760496.1
(22) Anmeldetag: 26.11.2009
(51) Int. Cl.: B21D 28/30, B21D 53/12, B21J 5/00, F16C 33/54

(54) **VERFAHREN UND VORRICHTUNG ZUM HERSTELLEN EINES KÄFIGS EINES WÄLZLAGERS**
METHOD AND DEVICE FOR PRODUCING A CAGE OF A ROLLING BEARING
PROCÉDÉ ET DISPOSITIF DE FABRICATION D'UNE CAGE D'UN PALIER À ROULEMENT

(30) Priorität: 08.12.2008 DE 102008060700
(43) Veröffentlichungstag der Anmeldung: 05.10.2011
(73) Patentinhaber: AB SKF, 415 50 Göteborg (SE)
(72) Erfinder: BENKERT, Peter, 97453 Schonungen (DE); BEYFUSS, Berthold, 97535 Kaisten (DE); RADINA, Alfred, 97711 Poppenlauer (DE); SCHIERLING, Jonas, 97437 Haßfurt (DE); FRIEDRICH, Hans-Jürgen, 97486 Königsberg (DE)
(74) Vertreter: Schonecke, Mitja
(86) Internationale Anmeldenummer: PCT/EP2009/008417
(87) Internationale Veröffentlichungsnummer: WO 2010/075915

(56) Entgegenhaltungen:
- DE-C1- 19 625 931
- US-A- 3 022 811
- US-A- 3 535 964
- US-A- 4 205 545

## Beschreibung

Die Erfindung betrifft ein Verfahren und eine Vorrichtung zum Herstellen eines Käfigs eines Wälzlagers. Weiterhin betrifft die Erfindung einen Käfig eines Wälzlagers.

Für Käfige von Wälzlagern sind vielfältige Realisierungsvarianten bekannt, die sich beispielsweise hinsichtlich ihrer geometrischen Ausbildung, des verwendeten Materials, der Größe, der geforderten Toleranz usw. unterscheiden. Beispielsweise können Käfige Taschen zur Aufnahme von Wälzkörpern aufweisen, die in Umfangsrichtung durch Stege voneinander getrennt sind und aus Metall gefertigt sind. Bei der Herstellung derartig ausgebildeter Käfige kommen häufig Stanzverfahren zum Einsatz. Mit einem Stanzverfahren können die Taschen schnell und kostengünstig ausgebildet werden. Allerdings geht mit dem Stanzen oftmals das Risiko einher, dass störende Stanzgrate entstehen. Die Stanzgrate sind dann besonders problematisch, wenn sie im Bereich der für die Führung der Wälzkörper vorgesehenen Anlaufflächen an den Stegseiten auftreten.

Es ist bereits eine Reihe von Verfahren bekannt, die Qualität von gestanzten Käfigen zu verbessern. Beispielsweise wird in der DE 196 25 931 C1 vorgeschlagen, jeweils gleichzeitig im Bereich zweier Käfigtaschen eine Stanzoperation von innen nach außen auszuführen, wobei die Stanzbreite geringer als die Taschenbreite ist. Die volle Taschenbreite wird jeweils durch eine zweite Stanzoperation erreicht. Auf diese Weise lassen sich günstige Winkelverhältnisse im Bereich der Stanzflächen erzielen.

Weiterhin ist es aus der DE 198 07 160 A1 bekannt, durch eine Umformoperation unter Zuhilfenahme einer Matrize einen Ringkörper mit radial überstehenden Stegen auszubilden, die sehr präzise Anlaufflächen für die Wälzkörper aufweisen. Anschließend wird das Grundmaterial zwischen den Stegen ausgestanzt, wobei die Stanzflächen außerhalb der Anlaufflächen verlaufen und die Präzision der Anlaufflächen somit erhalten bleibt.

Aus der US 4,205,545 ist ein Verfahren zur Herstellung eines Schalldämpfers für eine Brennkraftmaschine bekannt, bei dem mittels einer Stech- oder Schervorrichtung, die Stechwerkzeuge und zugehörige Stützvorsprünge aufweist, Paare von Öffnungen in einem dünnwandigen Rohr ausgebildet werden und mittels einer Umformvorrichtung, die Umformwerkzeuge und zugehörige Matrizen aufweist, jeweils die Bereiche zwischen benachbarten Einschnitten V-förmig nach außen gebogen werden.

Der Erfindung liegt die Aufgabe zugrunde, eine effiziente Herstellung eines Käfigs eines Wälzlagers mit qualitativ hochwertigen Anlaufflächen für die Wälzkörper zu ermöglichen.

Diese Aufgabe wird durch ein Verfahren mit der Merkmalskombination des Anspruchs 1 sowie durch eine Vorrichtung gemäß Anspruch 10.

Beim erfindungsgemäßen Verfahren zum Herstellen eines Käfigs eines Wälzlagers werden eine erste Stanzfläche, eine zweite Stanzfläche und eine Prägefläche einer Stempelanordnung und eine Auflagefläche einer Matrizenanordnung so benachbart zum Käfig angeordnet, dass die Prägefläche und die Auflagefläche bezogen auf die Umfangsrichtung des Käfigs zwischen der ersten Stanzfläche und der zweiten Stanzfläche angeordnet sind. Durch eine Vorschubbewegung der ersten Stanzfläche wird eine erste Ausnehmung aus dem Käfig gestanzt. Durch eine Vorschubbewegung der zweiten Stanzfläche wird lateral versetzt zur ersten Ausnehmung eine zweite Ausnehmung aus dem Käfig gestanzt und dabei ein Steg zwischen der ersten Ausnehmung und der zweiten Ausnehmung ausgebildet. Durch eine Vorschubbewegung der Prägefläche, die mit der Vorschubbewegung der ersten Stanzfläche und/oder der zweiten Stanzfläche gekoppelt ist, wird die Prägefläche auf den Steg abgeprägt und dabei Material verdrängt. Während des Abprägens der Prägefläche auf den Steg wird eine zwischen dem Steg und der Auflagefläche ausgebildete Kontaktfläche vergrößert. Zu Begin der Prägeoperation erstreckt sich die Kontaktfläche über maximal 50% der Auflagefläche.

Die Erfindung hat den Vorteil dass ein Käfig mit hochwertigen Anlaufflächen für die Wälzkörper sehr effizient hergestellt werden kann. Insbesondere können das Stanzen der Stege des Käfigs und das Ausbilden der Anlaufflächen an den Stegen in einem einzigen Arbeitsgang erfolgen.

Die Vorschubbewegung der ersten Stanzfläche und der zweiten Stanzfläche kann bezogen auf den Käfig von innen nach außen ausgeführt werden. Dies kann insbesondere bei kleinen Käfigen im Hinblick auf eine möglichst gute Nutzung der Platzverhältnisse Vorteile bringen.

Die erste Ausnehmung und die zweite Ausnehmung können gleichzeitig aus dem Käfig gestanzt werden. Dadurch lässt sich eine hohe Fertigungsgeschwindigkeit erreichen und eine unerwünschte asymmetrische Verformung des Käfigs verhindern. Insbesondere können die erste Ausnehmung und die zweite Ausnehmung in Umfangsrichtung des Käfigs unmittelbar benachbart zueinander ausgebildet werden. Dies bedeutet, dass zwischen der ersten Ausnehmung und der zweiten Ausnehmung keine weiteren Ausnehmungen vorhanden sind.

Der Käfig kann beim Stanzen der ersten Ausnehmung und/oder der zweiten Ausnehmung im Bereich des Stegs unterstützt werden, wobei die Unterstützung lediglich in einem Teilabschnitt der Umfangserstreckung des Stegs wirksam ist. Weiterhin ist es möglich, dass der Käfig beim Stanzen der ersten Ausnehmung und/oder der zweiten Ausnehmung im Bereich des Stegs verformt wird. Durch diese Verformung kann das nachfolgende Abprägen der Prägefläche in den Steg erleichtert werden.

Die Kontaktfläche zwischen dem Steg und der Auflagefläche kann durch das verdrängte Material vergrößert werden. Dies bedeutet, dass das verdrängte Material zur Auflagefläche hin ausweichen kann und dadurch die Umformung erleichtert wird. Weiterhin kann durch eine Einwirkung einer lateral neben der Prägefläche angeordneten Zusatzfläche auf den Käfig Material zu der Prägefläche hin verdrängt werden. Dadurch wird die Umformung ebenfalls erleichtert. Die Zusätzliche kann insbesondere keilförmig ausgebildet sein.

Bei einer Variante des erfindungsgemäßen Verfahrens werden zwei Prägeflächen auf den Steg abgeprägt. Außerdem ist das erfindungsgemäße Verfahren insbesondere so ausgebildet, dass die Auflagefläche während des Prägens ruht.

Die ersten Stanzfläche und die zweite Stanzfläche und die Prägefläche werden vorzugsweise synchron bewegt. Außerdem ist es vorteilhaft, wenn das Stanzen und das Prägen in einer durchgehenden Vorschubbewegung erfolgt. Durch diese Maßnahmen lässt sich eine schnelle und präzise Bearbeitung des Käfigs erreichen.

Der Käfig kann nach dem Prägen in Umfangsrichtung weiterbewegt werden.

Die erfindungsgemäße Vorrichtung zum Herstellen eines Käfigs eines Wälzlagers weist eine Stempelanordnung und eine Matrizenanordnung auf. Die Stempelanordnung weist eine erste Stanzfläche, eine zweite Stanzfläche und eine Prägefläche auf, die miteinander gekoppelt sind. Die Matrizenanordnung weist eine Auflagefläche auf. Die Prägefläche und die Auflagefläche sind zwischen der ersten Stanzfläche und der zweiten Stanzfläche angeordnet. Die Auflagefläche weicht bezüglich ihrer Formgebung von der Form eines der Auflagefläche gegenüberliegenden Bereichs des Käfigs ab. Im Folgenden wird die derart ausgebildete Auflagefläche auch als korrugiert bezeichnet. Da der gegenüberliegende Bereich des Käfigs eine leichte Krümmung aufweist, ist unter der Korrugation der Auflagefläche im Sinne der Erfindung eine von dieser geringfügigen Krümmung des Käfigs abweichende Korrugation zu verstehen.

Die Stempelanordnung kann entlang einer Achse beweglich ausgebildet sein. Die Prägefläche kann an einer anderen Position entlang der Achse angeordnet sein als die erste Stanzfläche und die zweite Stanzfläche. Dadurch wird ein aufeinander folgendes Stanzen und Prägen in einer durchgehenden Vorschubbewegung ermöglicht. Insbesondere können die erste Stanzfläche und die zweite Stanzfläche und die Prägefläche starr verbunden sein. Dies lässt sich sehr einfach realisieren und ermöglicht einen einfachen Betrieb der erfindungsgemäßen Vorrichtung.

Die erste Stanzfläche und die zweite Stanzfläche können eine Breite aufweisen, die wenigstens der Hälfte der Breite von am Käfig ausgebildeten Taschen zur Aufnahme von Wälzkörpern entspricht. Dadurch ist es möglich, mit zwei Stanzschritten die Taschen des Käfigs in ihrer vollen Breite zu stanzen.

Die Prägefläche kann gegenüber der ersten Stanzfläche und der zweiten Stanzfläche geneigt ausgebildet sein. Weiterhin kann die Stempelanordnung zwei Prägeflächen aufweisen.

Ebenso ist es auch möglich, dass die Stempelanordnung eine Zusatzfläche aufweist. Die Zusatzfläche kann insbesondere keilförmig ausgebildet sein. Der Einsatz einer Zusatzfläche ermöglicht eine Unterstützung des Umformprozesses.

Die Auflagefläche kann der Prägefläche gegenüberliegend angeordnet sein. Insbesondere kann die Auflagefläche achsensymmetrisch ausgebildet sein. Weiterhin kann die Auflagefläche quer zu ihrer Längserstreckung korrugiert ausgebildet sein. Beispielsweise kann die Auflagefläche wenigstens bereichsweise eine konkave oder eine konvexe Form aufweisen.

Die Erfindung wird nachstehend anhand der in der Zeichnung dargestellten Ausführungsbeispiele erläutert.

Es zeigen
- Figur 1: ein Ausführungsbeispiel einer erfindungsgemäß ausgebildeten Vorrichtung zur Herstellung eines Käfigs eines Wälzlagers in einer schematischen Schnittdarstellung,
- Figur 2: einen vergrößerten Ausschnitt aus Figur 1,
- Figuren 3 bis 5: unterschiedliche Momentaufnahmen der erfindungsgemäßen Vorrichtung in einer Figur 2 entsprechenden Darstellung,
- Figuren 6 bis 8: Ausführungsbeispiele der erfindungsgemäßen Vorrichtung mit unterschiedlichen Ausgestaltungen der inneren Auflagefläche der Matrize in einer Figur 2 entsprechenden Darstellung,
- Figur 9: ein weiteres Ausführungsbeispiel der erfindungsgemäßen Vorrichtung in einer Figur 2 entsprechenden Darstellung und
- Figuren 10 bis 12: Teilansichten verschiedener Ausführungsbeispiele eines Käfigs in perspektivischer Darstellung.

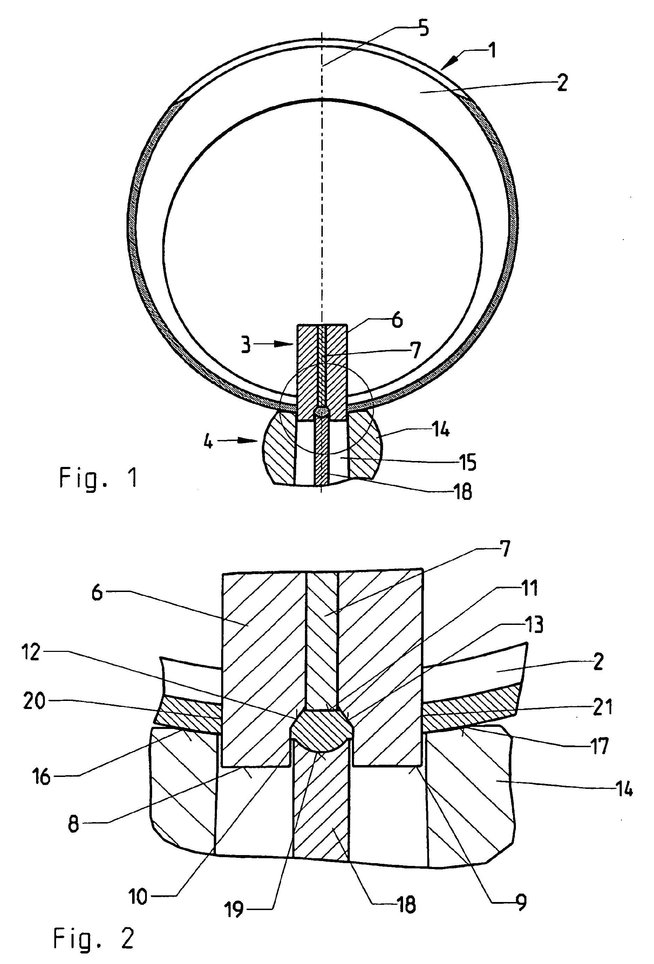

Figur 1 zeigt ein Ausführungsbeispiel einer erfindungsgemäß ausgebildeten Vorrichtung zur Herstellung eines Käfigs 1 eines Wälzlagers in einer schematischen Schnittdarstellung. Ein vergrößerter Ausschnitt aus Figur 1 ist in Figur 2 dargestellt. Die Darstellungen beziehen sich auf eine Momentaufnahme während der Bearbeitung des Käfigs 1 mit der erfindungsgemäßen Vorrichtung.

Der Käfig 1 ist für einen Einsatz bei einem Kegelrollenlager vorgesehen und im dargestellten Bearbeitungsstadium als eine konisch geformte Hülse mit einer durchgehenden, d. h. noch nicht perforierten, Käfigwand 2 ausgebildet. Der Käfig 1 ist insbesondere als ein Blechteil, beispielsweise aus Messing oder aus Aluminium, ausgebildet. Die erfindungsgemäße Vorrichtung kann auch so abgewandelt werden, dass damit andere Käfigtypen, z. B. für Zylinderrollenlager, hergestellt werden können.

Die erfindungsgemäße Vorrichtung weist einen Stempel 3 und eine Matrize 4 auf, die entlang einer gemeinsamen Achse 5 orientiert sind. Soweit jeweils nichts anderes erwähnt ist, dient die Achse 5 im Folgenden jeweils als Bezugsachse. Der Stempel 3 ist entlang der Achse 5 verschiebbar und weist ein Außenteil 6 und ein vom Außenteil 6 umschlossenes Innenteil 7 auf, das sich - ebenso wie das Außenteil 6 - entlang der Achse 5 erstreckt. Das Innenteil 7 kann mit dem Außenteil 6 starr verbunden sein oder relativ zum Außenteil 6 verschiebbar ausgebildet sein. Insbesondere ist es auch möglich, das Außenteil 6 und das Innenteil 7 einteilig auszubilden.

Im Bereich eines axialen Endes des Stempels 3 sind am Außenteil 6 zwei Stanzflächen 8 und 9 ausgebildet, die jeweils eine Trapezform besitzen und durch eine Vertiefung 10 voneinander getrennt sind. Der Boden der Vertiefung 10 wird teils durch eine axiale Endfläche 11 des Innenteils 7 und teils durch Prägeflächen 12 und 13 gebildet, die am Außenteil 6 ausgebildet und beidseits der axialen Endfläche 11 des Innenteils 7 angeordnet sind. Die axiale Endfläche 11 des Innenteils 7 ist beim dargestellten Ausführungsbeispiel als eine rechteckige ebene Fläche ausgebildet.

Die Matrize 4 weist ein Außenteil 14 mit einer Öffnung 15 auf, deren Maße auf die Außenmaße des Stempels 3 abgestimmt sind. Zu beiden Seiten lateral neben der Öffnung 15 sind an einem axialen Ende des Außenteils 14 der Matrize 4 äußere Auflageflächen 16 und 17 zur großflächigen Abstützung des Käfigs 1 ausgebildet. In der Mitte der Öffnung 15, d. h. im Bereich der Achse 5, weist die Matrize 4 ein Innenteil 18 auf. An einem axialen Ende des Innenteils 18 der Matrize 4 ist eine innere Auflagefläche 19 zur lokalen Abstützung des Käfigs 1 ausgebildet. Die innere Auflagefläche 19 weicht allerdings bzgl. ihrer Formgebung von der Form des benachbarten Bereichs der Käfigwand 2 ab und stützt die Käfigwand somit nicht vollflächig. Im Folgenden wird die derart ausgebildete innere Auflagefläche 19 auch als korrugiert bezeichnet. Korrugiert bedeutet dabei zunächst eine von einer durchgehend ebenen Fläche abweichende Form. Da der benachbarte Bereich der Käfigwand 2 eine leichte Krümmung aufweist, ist unter der Korrugation der inneren Auflagefläche 19 im Sinne der Erfindung eine von dieser geringfügigen Krümmung der Käfigwand 2 abweichende Korrugation zu verstehen. Insbesondere ist die innere Auflagefläche 19 parallel zu ihrer Längserstreckung, die in den Figuren 1 und 2 senkrecht zur Zeichenebene verläuft, eben und quer dazu korrugiert ausgebildet. Bei dem in den Figuren 1 und 2 dargestellten Ausführungsbeispiel ist die innere Auflagefläche 19 konkav geformt, d. h. als eine Mulde ausgebildet.

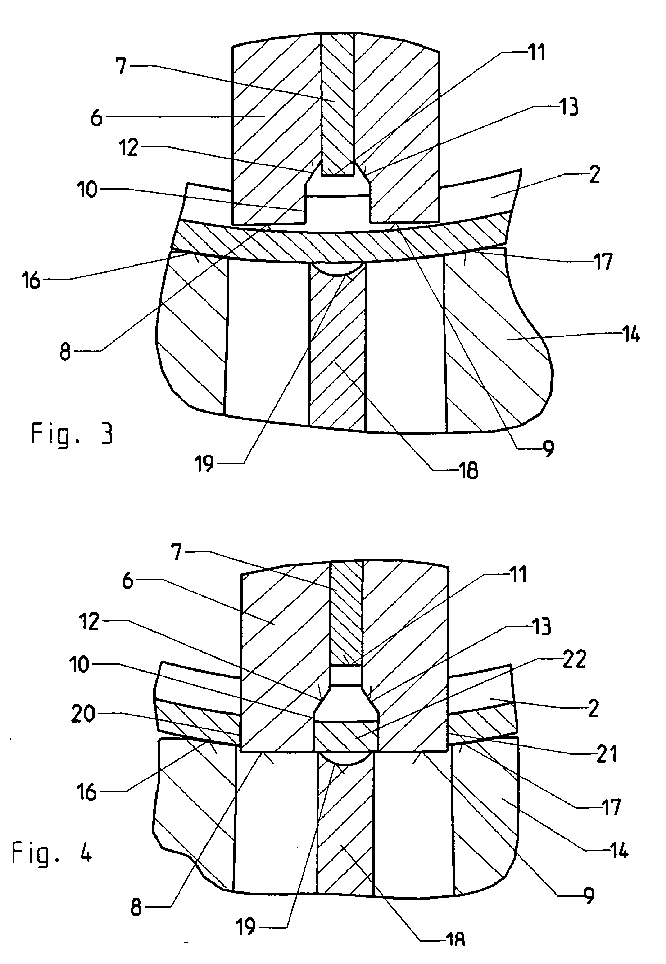

Das erfindungsgemäße Verfahren wird im Folgenden anhand der Figuren 1 bis 5 erläutert, wobei die Figuren 3 bis 5 weitere Momentaufnahmen der erfindungsgemäßen Vorrichtung in einer Figur 2 entsprechenden Darstellung zeigen.

Zur Durchführung des erfindungsgemäßen Verfahrens werden der Stempel 3 innerhalb des Käfigs 1 und die Matrize 4 außerhalb des Käfigs 1 so angeordnet und so orientiert, dass die Achse 5 senkrecht zu dem zwischen dem Stempel 3 und der Matrize 4 angeordneten Abschnitt der Käfigwand 2 verläuft und dieser Abschnitt auf der inneren Auflagefläche 19 der Matrize 4 sowie die dazu benachbarten Abschnitte der Käfigwand 2 auf den äußeren Auflageflächen 16, 17 der Matrize 4 aufliegen. Dann wird der Stempel 3 parallel zur Achse 5 in eine Vorschubbewegung zur Matrize 4 hin versetzt. Durch diese Vorschubbewegung wird der Stempel 3 der Käfigwand 2 angenähert bis er diese berührt. Diese Situation ist in Figur 3 dargestellt.

Da sich die Käfigwand 2 auf die Matrize 4 abstützt und somit der Vorschubbewegung des Stempels 3 nicht ausweichen kann, wird die Käfigwand 2 im weiteren Verlauf der Vorschubbewegung im Bereich der Stanzflächen 8, 9 des Außenteils 6 des Stempels 3 durchtrennt. Figur 4 zeigt eine Momentaufnahme zu diesem Zeitpunkt. Auf die geschilderte Weise werden aus der Käfigwand 2 zwei benachbarte Ausnehmungen 20, 21 ausgestanzt, die in einem späteren Bearbeitungsschritt zu Taschen zur Aufnahme von Wälzkörpern vergrößert werden. In Umfangsrichtung des Käfigs 1 verbleibt zwischen den Ausnehmungen 20, 21 ein Steg 22. Das zur Ausbildung der Ausnehmungen 20, 21 aus der Käfigwand 2 ausgestanzte Material ist in der Momentaufnahme der Figur 4 bereits aus der erfindungsgemäßen Vorrichtung entfernt und deshalb nicht figürlich dargestellt.

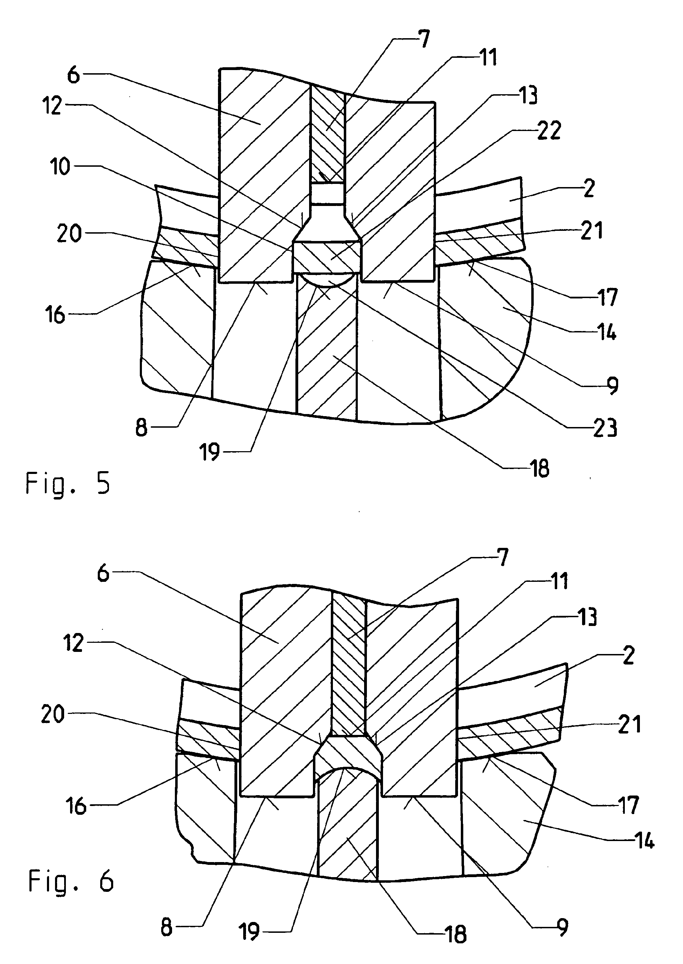

Im weiteren Verlauf der Vorschubbewegung werden die Prägeflächen 12, 13 des Außenteils 6 des Stempels 3 dem Steg 22 immer stärker angenähert und liegen schließlich berührend am Steg 22 an, der sich auf das Innenteil 18 der Matrize 4 abstützt. Diese Situation ist in Figur 5 dargestellt.

Die weitere Vorschubbewegung führt dann zu einer Verformung des Stegs 22, bei der die Prägeflächen 12, 13 des Außenteils 6 des Stempels 3 auf den Steg 22 abgeformt werden. Der Endzustand nach Vollendung der Vorschubbewegung des Stempels 3 ist in Figur 2 dargestellt. In diesem Endzustand sind die Prägeflächen 12, 13 vollflächig abgeformt. Nach Erreichen dieses Endzustands wird der Stempel 3 wieder vollständig zurückgefahren. Dann wird der Käfig 1 um eine Taktposition weiter gedreht. Der Drehwinkel entspricht dabei dem von zwei aufeinander folgenden Stegen 22 eingeschlossenen Mittelpunktswinkel. In der neuen Winkelposition wird die beschriebene Vorgehensweise wiederholt und dadurch ein weiterer Steg 22 ausgebildet. Außerdem wird eine der in der vorhergehenden Winkelposition gestanzten Ausnehmungen 20, 21 durch eine überlappende Stanzung einer weiteren Ausnehmung 20 bzw. 21 in Umfangsrichtung auf die vorgesehene Taschenbreite verbreitert.

Das Abformen der Prägeflächen 12, 13 geht mit einer Verdichtung und Verdrängung des Stegmaterials einher. Infolge der Verdichtung reduziert sich das Volumen des Käfigmaterials geringfügig. Das Ausmaß der Volumenreduzierung variiert etwas für unterschiedliche Materialien und beträgt maximal 5 bis 10 %. Die Volumenreduzierung ist in der Regel geringer als das für die Abformung der Prägeflächen 12, 13 zu verdrängende Materialvolumen. Im Rahmen der Erfindung ist es daher vorgesehen, dass die innere Auflagefläche 19 der Matrize 4 während der Stanzoperation und zu Beginn der Prägeoperation nicht vollflächig an der Käfigwand 2 anliegt und somit im Bereich des Stegs 22 ein Zwischenraum 23 zwischen der Matrize 4 und der Käfigwand 2 verbleibt (siehe z. B. Figur 5). Der Zwischenraum 23 wird im Verlauf der Prägeoperation ganz oder teilweise mit verdrängtem Material gefüllt. Da die Berührungspunkte zwischen der inneren Anlagefläche 19 der Matrize 4 und der Käfigwand 2 zu Beginn der Stanzoperation auf der Mantelfläche des Käfigs 1 liegen, erstreckt sich der Zwischenraum 23 bezogen auf den Käfig 1 zu größeren Radien als dem jeweiligen Radius der Mantelfläche des Käfigs 1. Demgemäß stehen die mit dem erfindungsgemäßen Verfahren erzeugten Stege 22 radial nach außen über die Mantelfläche des Käfigs 1 über.

Die Verformung des Käfigmaterials im Bereich des Stegs 22 kann auch bereits vor der Prägeoperation durch den Stanzvorgang eingeleitet und durch das Abformen der Prägeflächen 12, 13 vollendet werden. In diesem Fall scheren die Stanzflächen 8, 9 des Außenteils 6 des Stempels 3 das Käfigmaterial in der Umgebung des Stegs 22 nicht lediglich ab, sondern deformieren die Randbereiche des Stegs 22 auch etwas in Richtung der Vorschubbewegung des Stempels 3. Das Ausmaß dieser Deformation kann über die Stanzgeometrie, insbesondere über die Geometrie der Spalte zwischen den Stanzflächen 8, 9 des Stempels 3 und der inneren Auflagefläche 19 der Matrize 4, eingestellt werden. Auch die Geometrie der inneren Auflagefläche 19 der Matrize 4 hat Einfluss auf die Deformation des Stegs 22 während der Stanzoperation.

Im Rahmen der Erfindung ist es möglich, die erfindungsgemäße Vorrichtung so abzuwandeln, dass die innere Auflagefläche 19 der Matrize 4 eine von der Darstellung der Figuren 1 bis 5 abweichende Geometrie aufweist. Die Geometrie der inneren Auflagefläche 19 der Matrize 4 hat sowohl Auswirkungen auf die Stanzoperation als auch auf die nachfolgende Prägeoperation. Der Einfluss auf die Stanzoperation beruht insbesondere darauf, dass die innere Auflagefläche 19 der Matrize 4 während der Stanzoperation als Widerlager dient und das Stanzergebnis auch davon abhängt, wo die zu stanzende Käfigwand 2 unterstützt wird. Der Einfluss auf die Prägeoperation ergibt sich dadurch, dass die Anordnung der Stellen, an denen die Käfigwand 2 beim Einbringen der Verformungskräfte abgestützt wird, die Verteilung der Verformungskräfte im Käfigmaterial beeinflusst und dass der Materialfluss des verdrängten Materials von verfügbaren Freiräumen, die das verdrängte Material aufnehmen können, abhängt.

In den Figuren 6 bis 8 sind in einer jeweils Figur 2 entsprechenden Darstellung Ausführungsbeispiele der erfindungsgemäßen Vorrichtung mit unterschiedlichen Ausgestaltungen der inneren Auflagefläche 19 der Matrize 4 dargestellte.

Bei dem in Figur 6 dargestellten Ausführungsbeispiel weist die innere Auflagefläche 19 der Matrize 4 eine konvexe, d. h. nach außen gewölbte, Form auf, wobei die höchste Erhebung bezogen auf die Querabmessung der inneren Auflagefläche 19 mittig angeordnet ist. Weiterhin ist die innere Auflagefläche 19 bzgl. der Achse 5 achsensymmetrisch ausgebildet. Insbesondere ist die innere Auflagefläche 19 als ein Segment einer Zylinderoberfläche oder als eine sonstige gekrümmte Fläche ausgebildet. Die konvexe Form der inneren Auflagefläche 19 der Matrize 4 begünstigt eine Deformation des Stegs 22 bereits im Rahmen des Stanzvorgangs.

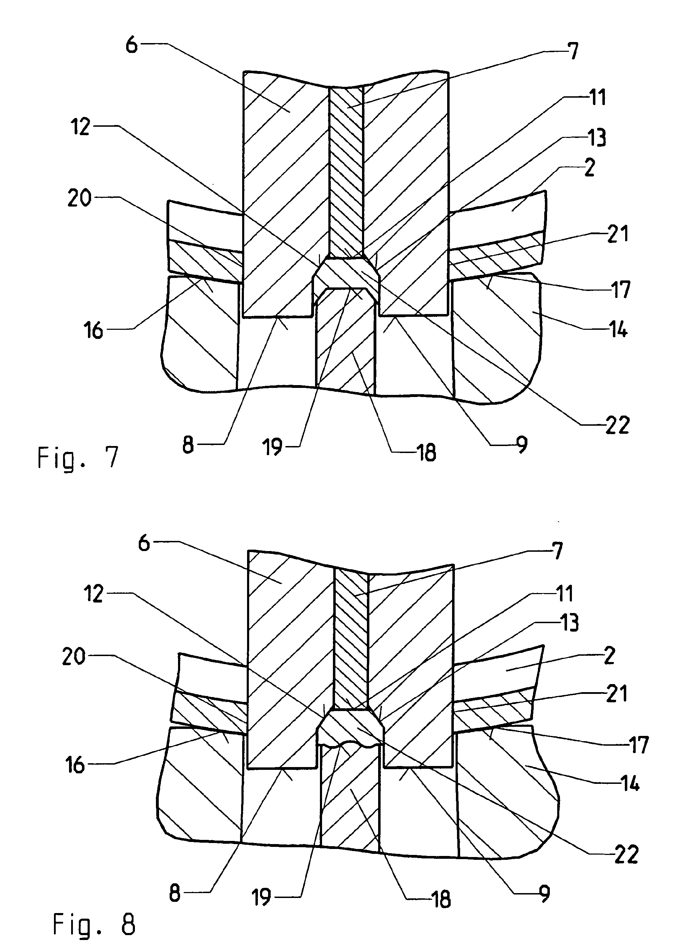

In Figur 7 ist ein Ausführungsbeispiel mit einer inneren Auflagefläche 19 der Matrize 4 dargestellt, welche insgesamt ebenfalls eine konvexe Form aufweist und achsensymmetrisch ausgebildet ist. Allerdings weist die innere Auflagefläche 19 der Matrize 4 im Gegensatz zu dem in Figur 6 dargestellten Ausführungsbeispiel keine Krümmung auf, sondern ist aus drei ebenen Flächen zusammengesetzt, die ein Profil mit einem trapezförmigen Querschnitt ausbilden.

Figur 8 zeigt ein Ausführungsbeispiel, bei dem die innere Auflagefläche 19 der Matrize 4 eine wellige Form aufweist, die sich aus abwechselnd aufeinander folgenden konkaven und konvexen Bereich zusammensetzt. Dabei ist die innere Auflagefläche 19 der Matrize 4 wiederum achsensymmetrisch ausgebildet.

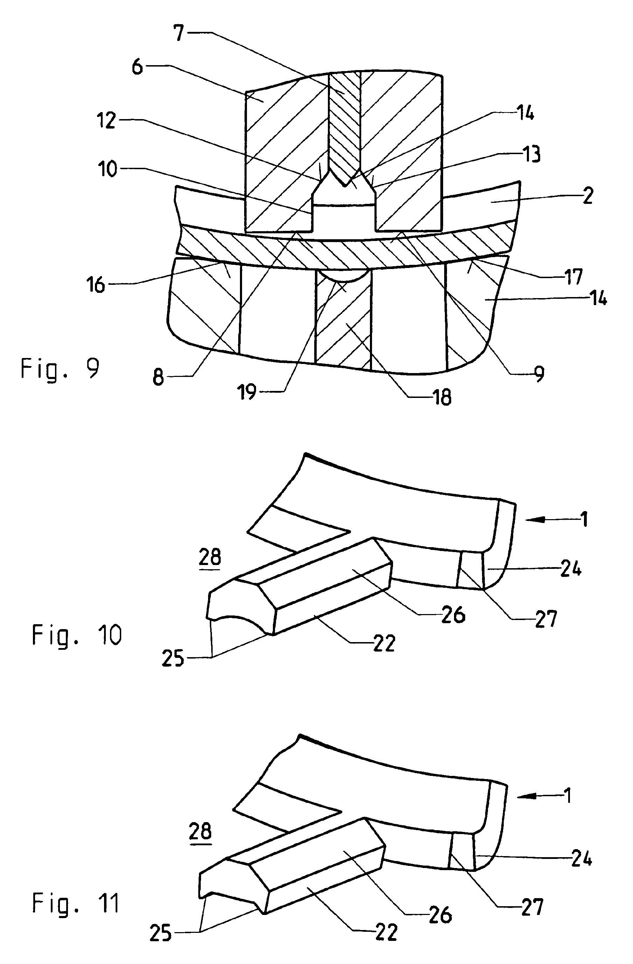

Die erfindungsgemäße Vorrichtung kann auch in anderer Weise abgewandelt werden als durch Änderung der Form der inneren Auflagefläche 19 der Matrize 4. Eine solche weitere Abwandlung ist in Figur 9 dargestellt.

Figur 9 zeigt ein weiteres Ausführungsbeispiel der erfindungsgemäßen Vorrichtung in einer Figur 2 entsprechenden Darstellung. Die Ausführungsbeispiele der Figuren 2 und 9 unterscheiden sich hinsichtlich der Ausbildung der axialen Endfläche 11 des Innenteils 7 des Stempels 3. Beim Ausführungsbeispiel der Figur 2 ist die axiale Endfläche 11 des Innteils 7 des Stempels 3 eben ausgebildet. Demgegenüber weist das in Figur 9 dargestellte Ausführungsbeispiel ein Innenteil 7 des Stempels 3 mit einer korrugierten axialen Endfläche 11 auf. Insbesondere ist die axiale Endfläche 11 keilförmig ausgebildet, wobei der Keil zur Matrize 4 hin spitz zuläuft. Im Übrigen entspricht das in Figur 9 dargestellte Ausführungsbeispiel dem Ausführungsbeispiel der Figur 2.

Die abgewandelte axiale Endfläche 11 des Innenteils 7 des Stempels 3 dient beim Ausführungsbeispiel der Figur 9 dazu, eine möglichst exakte Abformung der Prägeflächen 12, 13 zu unterstützen. Dies wird dadurch erreicht, dass der durch die axiale Endfläche 11 ausgebildete Keil im Rahmen der Prägeoperation in das Material der Käfigwand 2 im Bereich des Stegs 22 eingepresst wird und dadurch das Material der Käfigwand 2 insbesondere zu den Prägeflächen 12, 13 hin verdrängt wird. Im Übrigen entspricht die Vorgehensweise bei der Herstellung des Käfigs 1 dem bereits geschilderten kombinierten Stanz- und Prägeverfahren.

Das in Figur 9 dargestellte Ausführungsbeispiel kann auch so abgewandelt werden, dass die Matrize 4 eine andersartig ausgebildete innere Auflagefläche 19 aufweist.

Bei sämtlichen Ausführungsbeispielen der erfindungsgemäßen Vorrichtung besteht die Möglichkeit, das Innenteil 7 des Stempels 3 axial verschiebbar auszubilden, wobei die axiale Verschiebung unterschiedlichen Zwecken dienen kann. Beispielsweise kann ein Zurückfedern des Innenteils 7 des Stempels 3 zugelassen werden, um eine Überfüllung des durch den Stempel 3 und die Matrize 4 ausgebildeten Formraums während der Prägeoperation zu verhindern. Ebenso kann im Rahmen der Prägeoperation eine Vorschubbewegung des Innenteils 7 des Stempels 3 erzeugt werden, beispielsweise um eine Einformung der axialen Endfläche 11 des Innenteils 7 des Stempels 3 in den Steg 22 zu unterstützen bzw. zu verstärken. Außerdem kann die axiale Beweglichkeit des Innenteils 7 des Stempels 3 dazu genutzt werden, die Entformung des Stegs 22 nach der Prägeoperation zu erleichtern. Beispielsweise kann das Innenteil 7 des Stempels 3 hierzu beim Zurückfahren des Stempels 3 nach der Prägeoperation eine gegenläufige Vorschubbewegung ausführen, und dadurch verhindern, dass der Steg 22 mit dem Stempel 3 mitbewegt wird.

Die mit der erfindungsgemäßen Vorrichtung hergestellten Käfige 1 können sich durch eine besondere Ausgestaltung ihrer Stege 22 auszeichnen. Da bei den vorstehend beschriebenen Ausführungsbeispielen der erfindungsgemäßen Vorrichtung die Matrize 4 jeweils eine korrugierte innere Auflagefläche 19 aufweist, wird das Material der Käfigwand 2 bei der Prägeoperation im Bereich des Stegs 22 nach außen verdrängt und füllt den Zwischenraum 23 bzw. die Zwischenräume 23. Dieses Material steht somit radial nach außen über den ursprünglichen Verlauf der Käfigwand 2 vor der Stanz- und Prägeoperation über. Insbesondere steht dieses Material auch radial über eine Mantelfläche des fertigen Käfigs 1 über, die durch die Bereiche der Käfigwand 2 außerhalb der Stege 22 definiert wird, falls diese Bereiche im Rahmen des Herstellungsprozesses nicht ebenfalls verformt werden. Einige Ausführungsbeispiele für Käfige 1, die mit der erfindungsgemäßen Vorrichtung hergestellt wurden, sind in den Figuren 10 bis 12 dargestellt.

Figur 10 zeigt eine Teilansicht eines Ausführungsbeispiels eines Käfigs 1 in perspektivischer Darstellung. Dargestellt ist ein Ausschnitt des Käfigs 1, in dem einer der Stege 22 von einem Seitenring 24 abzweigt. Das dargestellte Ausführungsbeispiel wurde mit der erfindungsgemäßen Vorrichtung gemäß Figur 6 hergestellt. Demgemäß weisen die Stege 22 des Käfigs 1 auf ihrer Außenseite eine konkave Krümmung auf, welche komplementär zur konvexen Krümmung der inneren Auflagefläche 19 der Matrize 4 ausgebildet ist. Der tiefste Punkt der Krümmung, d. h. der Punkt im Bereich des kleinsten Käfigradius liegt auf der Mantelfläche des Käfigs 1 vor der Stanz- und Prägeoperation. In Umfangrichtung des Käfigs 1 beidseits dieses tiefsten Punkts sind am Steg 22 radiale Vorsprünge 25 ausgebildet, die sich jeweils über die gesamte Länge des Stegs 22 erstrecken. Die ursprüngliche Form der Mantelfläche ist im Bereich des Seitenrings 24 noch teilweise erhalten. Demgemäß stehen die radialen Vorsprünge 25 über diesen Teil des Seitenrings 24 radial nach außen über.

Auf seiner Innenseite weist der Steg 22 zwei Anlaufflächen 26 für Wälzkörper auf, die in dem Käfig 1 geführt werden. Die Anlaufflächen 26 sind durch Abformen der Prägeflächen 12, 13 des Stempels 3 ausgebildet worden und demgemäß eben ausgebildet und in einem Winkel zueinander orientiert.

Im Bereich seines den Stegen 22 zugewandten axialen Endes weist der Seitenring 24 Kanten 27 auf, die bzgl. ihrer Orientierung geringfügig von der Radialrichtung des Käfigs 1 abweichen. Die Kanten 27 entstehen dadurch, dass zur Ausbildung je einer Tasche 28 des Käfigs 1 zwei Ausnehmungen 20, 21 gestanzt werden, die größer als die halbe Taschenbreite sind und folglich miteinander überlappen. Da die axiale Position der Ausnehmungen 20, 21 aufgrund von Bauteil- und/oder Positioniertoleranzen geringfügig voneinander abweicht, entsteht an einem Ende der Überlappung jeweils die Kante 27. Demgemäß weist der Seitenring 24 pro Tasche 28 eine Kante 27 auf.

Figur 11 zeigt ein weiteres Ausführungsbeispiel des Käfigs 1 in einer Figur 10 entsprechenden Darstellung. Dieses Ausführungsbeispiel ist mit der in Figur 7 dargestellten erfindungsgemäßen Vorrichtung hergestellt. Demgemäß weisen die Stege 22 auf ihrer Außenseite eine ebene Fläche auf, die sich über die gesamte Länge der Stege 22 erstreckt und in Umfangsrichtung des Käfigs 1 beidseits durch die radialen Vorsprünge 25 begrenzt ist.

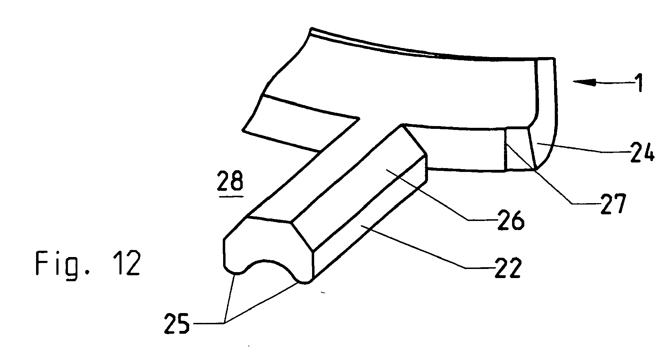

Figur 12 zeigt ein weiteres Ausführungsbeispiel des Käfigs 1 in einer Figur 10 entsprechenden Darstellung. Dieses Ausführungsbeispiel ist mit der in Figur 8 dargestellten erfindungsgemäßen Vorrichtung hergestellt, so dass die Außenseite der Stege 22 komplementär zu der inneren Auflagefläche 19 der Matrize 4 gemäß Figur 8 gewellt ist.

## Patentansprüche

1. Verfahren zum Herstellen eines Käfigs (1) eines Wälzlagers, wobei
- eine erste Stanzfläche (8), eine zweite Stanzfläche (9) und eine Prägefläche (12, 13) einer Stempelanordnung (3) und eine Auflagefläche (19) einer Matrizenanordnung (4) so benachbart zum Käfig (1) angeordnet werden, dass die Prägefläche (12, 13) und die Auflagefläche (19) bezogen auf die Umfangsrichtung des Käfigs (1) zwischen der ersten Stanzfläche (8) und der zweiten Stanzfläche (9) angeordnet sind,
- durch eine Vorschubbewegung der ersten Stanzfläche (8) eine erste Ausnehmung (20) aus dem Käfig (1) gestanzt wird,
- durch eine Vorschubbewegung der zweiten Stanzfläche (9) lateral versetzt zur ersten Ausnehmung (20) eine zweite Ausnehmung (21) aus dem Käfig (1) gestanzt wird und dabei ein Steg (22) zwischen der ersten Ausnehmung (20) und der zweiten Ausnehmung (21) ausgebildet wird,
- durch eine Vorschubbewegung der Prägefläche (12, 13), die mit der Vorschubbewegung der ersten Stanzfläche (8) und/oder der zweiten Stanzfläche (9) gekoppelt ist, die Prägefläche (12, 13) auf den Steg (22) abgeprägt und dabei Material verdrängt wird und
- während des Abprägens der Prägefläche (12, 13) auf den Steg (22) eine zwischen dem Steg (22) und der Auflagefläche (19) ausgebildete Kontaktfläche vergrößert wird.

2. Verfahren nach Anspruch 1, **dadurch gekennzeichnet, dass** die Vorschubbewegung der ersten Stanzfläche (8) und der zweiten Stanzfläche (9) bezogen auf den Käfig (1) von innen nach außen ausgeführt wird.

3. Verfahren nach einem der vorhergehenden Ansprüche, **dadurch gekennzeichnet, dass** die erste Ausnehmung (20) und die zweite Ausnehmung (21) gleichzeitig aus dem Käfig (1) gestanzt werden.

4. Verfahren nach einem der vorhergehenden Anspruch, **dadurch gekennzeichnet, dass** der Käfig (1) beim Stanzen der ersten Ausnehmung (20) und/oder der zweiten Ausnehmung (21) im Bereich des Stegs (22) unterstützt wird, wobei die Unterstützung lediglich in einem Teilabschnitt der Umfangserstreckung des Stegs (22) wirksam ist.

5. Verfahren nach einem der vorhergehenden Ansprüche, **dadurch gekennzeichnet, dass** die Kontaktfläche zwischen dem Steg (22) und der Auflagefläche (19) durch das verdrängte Material vergrößert wird.

6. Verfahren nach einem der vorhergehenden Ansprüche, **dadurch gekennzeichnet, dass** durch eine Einwirkung einer lateral neben der Prägefläche (12, 13) angeordneten Zusatzfläche (11) auf den Käfig (1) Material zu der Prägefläche (12, 13) hin verdrängt wird.

7. Verfahren nach einem der vorhergehenden Ansprüche, **dadurch gekennzeichnet, dass** die erste Stanzfläche (8) und die zweite Stanzfläche (9) und die Prägefläche (12, 13) synchron bewegt werden.

8. Verfahren nach einem der vorhergehenden Ansprüche, **dadurch gekennzeichnet, dass** das Stanzen und das Prägen in einer durchgehenden Vorschubbewegung erfolgen.

9. Verfahren nach einem der vorhergehenden Ansprüche, **dadurch gekennzeichnet, dass** der Käfig (1) nach dem Prägen in Umfangsrichtung weiterbewegt wird.

10. Vorrichtung zum Herstellen eines Käfigs (1) eines Wälzlagers, mit einer Stempelanordnung (3) und einer Matrizenanordnung (4), wobei
- die Stempelanordnung (3) eine erste Stanzfläche (8), eine zweite Stanzfläche (9) und eine Prägefläche (12, 13) aufweist, die miteinander gekoppelt sind,
- die Matrizenanordnung (4) eine Auflagefläche (19) aufweist,
- die Prägefläche (12, 13) und die Auflagefläche (19) zwischen der ersten Stanzfläche (8) und der zweiten Stanzfläche (9) angeordnet sind und
- die Auflagefläche (19) bezüglich ihrer Formgebung von der Form eines der Auflagefläche gegenüberliegenden Bereichs des Käfigs abweicht.

11. Vorrichtung nach Anspruch 10, **dadurch gekennzeichnet, dass** die Stempelanordnung (3) entlang einer Achse (5) beweglich ausgebildet ist.

12. Vorrichtung nach Anspruch 11, **dadurch gekennzeichnet, dass** die Prägefläche (12, 13) an einer anderen Position entlang der Achse (5) angeordnet ist als die erste Stanzfläche (8) und die zweite Stanzfläche (9).

13. Vorrichtung nach einem der Ansprüche 10 bis 12, **dadurch gekennzeichnet, dass** die erste Stanzfläche (8) und die zweite Stanzfläche (9) und die Prägefläche (12, 13) starr verbunden sind.

14. Vorrichtung nach einem der Ansprüche 10 bis 13, **dadurch gekennzeichnet, dass** die erste Stanzfläche (8) und die zweite Stanzfläche (9) eine Breite aufweisen, die wenigstens der Hälfte der Breite von am Käfig (1) ausgebildeten Taschen (28) zur Aufnahme von Wälzkörpern entspricht.

15. Vorrichtung nach einem der Ansprüche 10 bis 14, **dadurch gekennzeichnet, dass** die Prägefläche (12, 13) gegenüber der ersten Stanzfläche (8) und der zweiten Stanzfläche (9) geneigt ausgebildet ist.

## Claims

1. Method for producing a cage (1) of a rolling bearing, wherein
- a first punching surface (8), a second punching surface (9) and an embossing surface (12, 13) of a stamp arrangement (3) and a support surface (19) of a die arrangement (4) are arranged adjacent to the cage (1) in such a way that the embossing surface (12, 13) and the support surface (19) are arranged, in relation to the circumferential direction of the cage (1), between the first punching surface (8) and the second punching surface (9),
- by means of a feed movement of the first punching surface (8), a first recess (20) is punched out of the cage (1),
- by means of a feed movement of the second punching surface (9), a second recess (21) is punched out of the cage (1) laterally offset with respect to the first recess (20), and here, a web (22) is formed between the first recess (20) and the second recess (21),
- by means of a feed movement of the embossing surface (12, 13), which is coupled to the feed movement of the first punching surface (8) and/or of the second punching surface (9), the embossing surface (12, 13) is impressed on the web (22), and material is thereby displaced, and
- during the impressing of the embossing surface (12, 13) on the web (22), a contact surface which is formed between the web (22) and the support surface (19) is enlarged.

2. Method according to Claim 1, **characterized in that** the feed movement of the first punching surface (8) and the second punching surface (9) in relation to the cage (1) is carried out from the inside to the outside.

3. Method according to either of the preceding claims, **characterized in that** the first recess (20) and the second recess (21) are simultaneously punched out of the cage (1).

4. Method according to one of the preceding claims, **characterized in that** during punching of the first recess (20) and/or of the second recess (21) the cage (1) is supported in the region of the web (22), wherein the support is effective merely in a part section of the circumferential extent of the web (22).

5. Method according to one of the preceding claims, **characterized in that** the contact surface between the web (22) and the support surface (19) is enlarged by the displaced material.

6. Method according to one of the preceding claims, **characterized in that** by means of an effect of an additional surface (11), which is located laterally next to the embossing surface (12, 13), on the cage (1), material is displaced towards the embossing surface (12, 13).

7. Method according to one of the preceding claims, **characterized in that** the first punching surface (8) and the second punching surface (9) and the embossing surface (12, 13) are moved synchronously.

8. Method according to one of the preceding claims, **characterized in that** the punching and the embossing occur in one continuous feed movement.

9. Method according to one of the preceding claims, **characterized in that** the cage (1) is advanced in the circumferential direction after the embossing.

10. Device for producing a cage (1) of a rolling bearing, having a stamp arrangement (3) and a die arrangement (4), wherein
- the stamp arrangement (3) has a first punching surface (8), a second punching surface (9) and an embossing surface (12, 13) which are coupled to one another,
- the die arrangement (4) has a support surface (19),
- the embossing surface (12, 13) and the support surface (19) are located between the first punching surface (8) and the second punching surface (9), and
- the support surface (19) deviates with respect to its shaping from the shape of a region of the cage which faces the support surface.

11. Device according to Claim 10, **characterized in that** the stamp arrangement (3) is formed so as to be movable along an axis (5).

12. Device according to Claim 11, **characterized in that** the embossing surface (12, 13) is located at another position along the axis (5) than the first punching surface (8) and the second punching surface (9).

13. Device according to one of Claims 10 to 12, **characterized in that** the first punching surface (8) and the second punching surface (9) and the embossing surface (12, 13) are rigidly connected.

14. Device according to one of Claims 10 to 13, **characterized in that** the first punching surface (8) and the second punching surface (9) have a width which corresponds to at least half of the width of pockets (28) formed on the cage (1) for the accommodation of rolling elements.

15. Device according to one of Claims 10 to 14, **characterized in that** the embossing surface (12, 13) is formed in an inclined manner in relation to the first punching surface (8) and the second punching surface (9).

## Revendications

1. Procédé de fabrication d'une cage (1) d'un palier à roulement,
- une première surface de découpage (8), une deuxième surface de découpage (9) et une surface d'estampage (12, 13) d'un ensemble de poinçon (3) et une surface d'appui (19) d'un ensemble de matrice (4) étant disposées à proximité de la cage (1) de telle sorte que la surface d'estampage (12, 13) et la surface d'appui (19) soient disposées entre la première surface de découpage (8) et la deuxième surface de découpage (9) par rapport à la direction périphérique de la cage (1),
- une première cavité (20) étant découpée dans la cage (1) par un déplacement d'avancement de la première surface de découpage (8),
- une deuxième cavité (21) étant découpée dans la cage (1) par un déplacement d'avancement de la deuxième surface de découpage (9) de manière décalée latéralement par rapport à la première cavité (20) et une nervure (22) étant en l'occurrence réalisée entre la première cavité (20) et la deuxième cavité (21),
- par un déplacement d'avancement de la surface d'estampage (12, 13) qui est couplé au déplacement d'avancement de la première surface de découpage (8) et/ou de la deuxième surface de découpage (9), la nervure (22) étant estampée par la surface d'estampage (12, 13) et du matériau étant en l'occurrence déplacé et
- une surface de contact réalisée entre la nervure (22) et la surface d'appui (19) étant agrandie pendant l'estampage de la nervure (22) par la surface d'estampage (12, 13).

2. Procédé selon la revendication 1, **caractérisé en ce que** le déplacement d'avancement de la première surface de découpage (8) et de la deuxième surface de découpage (9) est effectué de l'intérieur vers l'extérieur par rapport à la cage (1).

3. Procédé selon l'une quelconque des revendications précédentes, **caractérisé en ce que** la première cavité (20) et la deuxième cavité (21) sont découpées simultanément dans la cage (1).

4. Procédé selon l'une quelconque des revendications précédentes, **caractérisé en ce que** la cage (1) est supportée dans la région de la nervure (22) lors du découpage de la première cavité (20) et/ou de la deuxième cavité (21), le support étant seulement effectif dans une section partielle de l'étendue périphérique de la nervure (22).

5. Procédé selon l'une quelconque des revendications précédentes, **caractérisé en ce que** la surface de contact entre la nervure (22) et la surface d'appui (19) est agrandie par le matériau déplacé.

6. Procédé selon l'une quelconque des revendications précédentes, **caractérisé en ce que** sous l'action sur la cage (1) d'une surface supplémentaire (11) disposée latéralement à côté de la surface d'estampage (12, 13), du matériau est déplacé en direction de la surface d'estampage (12, 13).

7. Procédé selon l'une quelconque des revendications précédentes, **caractérisé en ce que** la première surface de découpage (8) et la deuxième surface de découpage (9) ainsi que la surface d'estampage (12, 13) sont déplacées de manière synchrone.

8. Procédé selon l'une quelconque des revendications précédentes, **caractérisé en ce que** le découpage et l'estampage s'effectuent lors d'un déplacement d'avancement continu.

9. Procédé selon l'une quelconque des revendications précédentes, **caractérisé en ce que** la cage (1) est déplacée davantage dans la direction périphérique après l'estampage.

10. Dispositif de fabrication d'une cage (1) d'un palier à roulement, comprenant un ensemble de poinçon (3) et un ensemble de matrice (4),
- l'ensemble de poinçon (3) comprenant une première surface de découpage (8), une deuxième surface de découpage (9) ainsi qu'une surface d'estampage (12, 13) qui sont accouplées les unes aux autres,
- l'ensemble de matrice (4) comprenant une surface d'appui (19),
- la surface d'estampage (12, 13) et la surface d'appui (19) étant disposées entre la première surface de découpage (8) et la deuxième surface de découpage (9) et
- la surface d'appui (19) différant, en ce qui concerne sa forme, de la forme d'une région de la cage en regard de la surface d'appui.

11. Dispositif selon la revendication 10, **caractérisé en ce que** l'ensemble de poinçon (3) est réalisé de manière déplaçable le long d'un axe (5).

12. Dispositif selon la revendication 11, **caractérisé en ce que** la surface d'estampage (12, 13) est disposée, le long de l'axe (5), à une autre position que la première surface de découpage (8) et la deuxième surface de découpage (9).

13. Dispositif selon l'une quelconque des revendications 10 à 12, **caractérisé en ce que** la première surface de découpage (8) et la deuxième surface de découpage (9) ainsi que la surface d'estampage (12, 13) sont reliées rigidement.

14. Dispositif selon l'une quelconque des revendications 10 à 13, **caractérisé en ce que** la première surface de découpage (8) et la deuxième surface de découpage (9) présentent une largeur qui correspond à au moins la moitié de la largeur d'évidements (28) réalisés sur la cage (1) pour recevoir des corps de roulement.

15. Dispositif selon l'une quelconque des revendications 10 à 14, **caractérisé en ce que** la surface d'estampage (12, 13) est réalisée de manière inclinée par rapport à la première surface de découpage (8) et à la deuxième surface de découpage (9).
